# FASCICULE DE BREVET EUROPEEN

(11) **EP 2 410 287 B1**
(45) Date de publication et mention de la délivrance du brevet: **01.08.2018**
(21) Numéro de dépôt: 11171418.4
(22) Date de dépôt: 27.06.2011
(51) Int. Cl.: G01B 3/00, G01D 5/347

(54) **Dispositif de mesure et de lecture de distances en millimètres et en fractions de millimètres**
Vorrichtung zum Messen und Ablesen von Abständen in Millimetern und Millimeterbruchteilen
Device for measuring and reading distances in millimetres and fractions of millimetres

(30) Priorité: 02.07.2010 FR 1002796
(43) Date de publication de la demande: 25.01.2012
(73) Titulaire: Pryl, 74210 Giez (FR)
(72) Inventeur: Beaufils, Christian, 74210 Giez (FR)
(74) Mandataire: Vidon Brevets & Stratégie

(56) Documents cités:
- FR-A- 1 453 924
- GB-A- 767 969
- US-A1- 2008 066 335

## Description

Le domaine de l'invention est celui des dispositifs de mesure et de lecture de distance. Plus précisément, l'invention concerne un dispositif de mesure et de lecture de distance en millimètres et en fractions de millimètres, mettant en oeuvre deux réglettes graduées, l'une étant susceptible de coulisser par rapport à l'autre.

L'invention s'applique en particulier, mais non exclusivement, au dispositif pour mesurer l'évolution d'une fissure d'une paroi, afin de pouvoir contrôler notamment la sensibilité d'un bâtiment ou une partie de celui-ci, et de prévenir d'un éventuel danger.

Dans le domaine de l'invention, plusieurs solutions ont été proposées par l'art antérieur pour mesurer une distance, et notamment :
- les témoins en plâtre ;
- les réglettes graduées utilisant le principe du vernier ;
- les règles optiques ;
- les dilatomètres à palpeurs ;
- les jauges et ponts d'extensométrie électrique dites jauges de contrainte.

Les règles optiques, les dilatomètres à palpeurs et les jauges de contrainte mettent en oeuvre des solutions de haute technicité et s'adressent à des utilisateurs recherchant des micro-mesures. Ces solutions sont coûteuses et s'avèrent parfois démesurées par rapport aux contrôles recherchés, comme c'est le cas dans le secteur du bâtiment pour lequel une grande précision n'est pas toujours nécessaire. Les témoins en plâtre nécessitent quant à eux l'intervention d'une main-d'oeuvre qualifiée. De plus, ils ne sont pas fiables et ne donnent aucune indication dimensionnelle.

Avec les réglettes graduées, on constate dans la pratique que, bien que d'utilisation simple, les opérateurs ne maîtrisent toujours pas la lecture de celles-ci, ce qui peut conduire à des mesures fantaisistes.

Il existe donc un besoin pour ces opérateurs de disposer d'un système de lecture plus aisé.

A cette fin, il a notamment été proposé un dispositif de mesure et de lecture décrit par le document de brevet US-2008/066335. Selon cette technique, le dispositif comprend deux éléments dont l'un est susceptible d'être déplacé par rapport à l'autre, chacun des éléments portant des graduations et le deuxième élément étant gradué de façon à permettre une lecture de fractions des graduations du premier élément.

Selon un mode de réalisation, le premier élément présente des graduations successives sous forme de traits et le deuxième élément présente des graduations sous forme d'évidements s'étendant successivement et parallèlement les unes par rapport aux autres, ceci selon une direction formant un angle non nul avec les graduations (les traits) du premier élément. Ainsi, lorsqu'une graduation du premier élément apparaît partiellement approximativement à mi hauteur d'un évidement du deuxième élément, cette graduation du deuxième élément correspond à la fraction qui doit être lue.

Bien que cette technique tende à faciliter l'identification de la fraction de graduation mesurée, la lecture de ladite graduation reste toutefois relativement mal aisée. En effet, la fraction de graduation en question est détectée par l'intermédiaire d'un point apparaissant au croisement d'un des traits du premier élément avec des évidements du deuxième élément. Or, tant les traits du premier élément que les évidements du deuxième élément sont nécessairement très étroits pour assurer la précision de la mesure, cette étroitesse engendrant, au croisement d'un trait et d'un évidement, un point très petit. Et même si la réglette du deuxième élément est constituée d'un matériau transparent permettant de visualiser à quel endroit de la réglette les évidements se croisent avec les traits du premier élément, l'opérateur doit identifier le ou les points de croisement en question et situer leur hauteur dans l'évidement pour effectuer une lecture.

On comprend donc que la lecture n'est pas d'une extrême simplicité et que l'opérateur peut avoir lui-même un doute sur la lecture à effectuer et/ou sur l'interprétation de celle-ci.

On connaît par ailleurs le brevet GB-767 969 qui décrit un dispositif de mesure d'échelle, comprenant un élément gradué destiné à être soumis à un éclairage avec projection sur un autre élément gradué, de taille supérieure au premier, permettant de faciliter la lecture de l'échelle.

L'invention a donc pour objectif de répondre à ce besoin.

Plus précisément, l'invention a pour objectif de proposer un dispositif de mesure de distances en millimètres et en fractions de millimètre, mécanique, qui supprime, ou à tout le moins limite les risques d'erreurs de lecture de la distance mesurée.

L'invention a également pour objectif de proposer un tel dispositif qui soit simple de conception et peu coûteux à fabriquer et à mettre en oeuvre.

Ces objectifs, ainsi que d'autres qui apparaîtront par la suite, sont atteints grâce à l'invention qui a pour objet un dispositif de mesure et de lecture de distance, comprenant :
- une première réglette portant des graduations en millimètres le long d'une plage et selon une direction de mesure ;
- une deuxième réglette portant une marque destinée à être déplacée selon ladite direction de mesure par rapport auxdites graduations de ladite première réglette et présentant des graduations en 1/n de millimètres, n étant un nombre entier supérieur ou égal à 2, pour permettre une mesure et une lecture de distances en millimètres et en 1/n de millimètres,
caractérisé en ce que les graduations de ladite deuxième réglette se présentent sous la forme d'au moins (n-1) lignes chacune composée d'au moins une fenêtre alignée sur ladite marque par rapport à ladite direction de mesure, et en ce que ladite première réglette présente au moins n lignes de graduations, les graduations d'une même ligne étant écartées d'un millimètre l'une de l'autre et les lignes présentant un décalage incrémental de 1/n de millimètres d'une ligne à l'autre, la ou les fenêtres et les graduations des lignes s'étendant, selon la direction de mesure, sur une largeur inférieure ou égale à 1/n millimètre, les lignes de la deuxième réglette étant susceptibles d'être placées en coïncidence avec les lignes de la première réglette.

De cette façon, l'opérateur dispose d'un dispositif avec lequel les risques d'erreur de lecture sont supprimés ou à tout le moins limités.

En effet, avec un dispositif selon l'invention, l'une des lignes de graduation de la première réglette va venir en correspondance avec l'une des lignes de fenêtre(s) de la deuxième réglette. Chaque ligne de la deuxième réglette correspondant à un n^{ième} de millimètre, l'opérateur disposera d'un contraste visuel entre la ligne de la deuxième réglette qui fait apparaître la ou les graduations au travers de la ou les fenêtres de la ligne correspondante, et les autres lignes dont la ou les fenêtres ne feront pas apparaître de graduations.

Il est alors aisé pour l'opérateur de lire le nombre de n^{ième} correspondant, chaque ligne de la deuxième réglette pouvant être accompagnée d'un repérage quelconque indiquant le nombre de n^{ième} pour la mesure considérée.

En d'autres termes, l'invention propose une technique nouvelle par rapport à l'art antérieur, et en particulier par rapport au document de brevet US-2008/066335, en ce que :
- le premier élément porte des graduations principales et des graduations correspondant à des fractions des graduations principales ;
- les graduations correspondantes aux fractions sont organisées en n lignes les unes au-dessus des autres, avec chaque graduation décalée de façon incrémentale d'une ligne à l'autre ;
- le deuxième élément présente des fenêtres placées les unes au-dessus des autres, en nombre correspondant au nombre des lignes du premier élément, de façon à ce que l'une des graduations correspondant à une fraction du premier élément puisse apparaître au travers d'une fenêtre du deuxième élément.

Comme mentionné ci-dessus, l'opérateur dispose d'un contraste visuel assurant une lecture aisée de la mesure, ceci par l'intermédiaire de la ou des graduations apparaissant au travers de la ou des fenêtres du deuxième élément.

Comparé à la solution décrite par le document US-2008/0066335, l'invention propose une solution particulièrement efficace, s'agissant de permettre une lecture aisée, directe et sans interprétation d'une mesure par exemple en millimètre et en dixième de millimètre.

Selon un deuxième mode de réalisation avantageux, n = 10.

Selon ce mode de réalisation, une ligne supplémentaire est prévue pour une mesure correspondant à une distance en nombres entiers de millimètres (soit zéro dixième).

Selon l'un ou l'autre de ces deux modes de réalisation, les lignes de ladite deuxième réglette présentent avantageusement chacune au moins deux fenêtres, une première alignée sur ladite marque et l'autre à la droite de la première.

Préférentiellement, les lignes de ladite deuxième réglette présentent chacune cinq fenêtres, une première alignée sur ladite marque et les autres à la droite de la première.

On augmente ainsi la zone de contraste visuelle de la ligne de fenêtres faisant apparaître les graduations au n^{ième}, par rapport aux autres lignes ne faisant pas apparaître de graduations au n^{ième}.

Selon une solution avantageuse, les graduations des lignes de ladite première réglette sont des traits perpendiculaires à la direction de mesure, présentant, selon un mode de réalisation particulier, une hauteur de 2 mm.

Selon une première variante de réalisation, lesdites fenêtres sont des fenêtres par transparence.

Selon une deuxième variante de réalisation, lesdites fenêtres sont des évidements.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une représentation schématique d'une première réglette d'un dispositif de mesure de lecture des distances selon l'invention ;
- la figure 2 est une représentation schématique d'une deuxième réglette d'un dispositif de mesure et de lecture des distances selon l'invention ;
- la figure 3 est une vue d'un dispositif de mesure et de lecture des distances, selon un premier exemple de mesure ;
- la figure 4 est une vue d'un dispositif de mesure et de lecture de distances selon l'invention, selon un deuxième exemple de mesures.

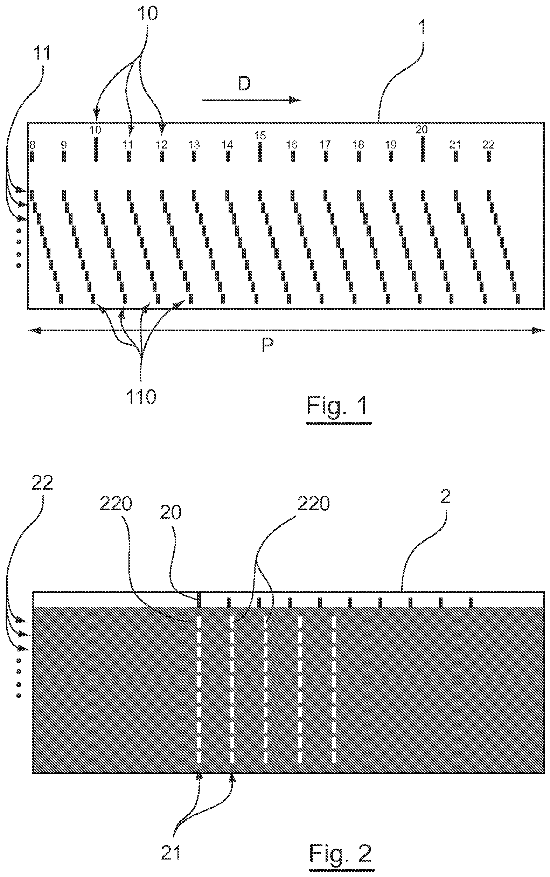

En référence aux figures 1 et 2, un dispositif de mesure et de lecture de distances selon l'invention comprend :
- une première réglette, illustrée par la figure 1 ;
- une deuxième réglette illustrée par la figure 2.

Tel que cela apparaît sur la figure 1, la première réglette porte une pluralité de graduations 10, séparées deux à deux d'une distance de 1 mm (la figure 1, ainsi que les autres figures, n'étant pas à l'échelle 1 ; toutes les figures correspondent en effet à un grossissement de la réalité à des fins de clarté de la description), le long d'une plage P, ceci selon une direction de mesure indiquée par la flèche D. On note que la plage P est ici indiquée à titre indicatif, puisque cette plage correspond en pratique à toute la longueur de mesure offerte par le dispositif.

Tel qu'illustré par la figure 2, la deuxième réglette 2 porte une marque 20 destinée à être déplacée selon la direction de mesure D par rapport aux graduations 10 de la première réglette 1. De plus, la deuxième réglette 2 présente des graduations en 1/n mm, n étant un nombre entier supérieur ou égal à 2.

Selon le présent mode de réalisation, le dispositif de mesure et de lecture de distances est prévu de telle sorte que les première et deuxième réglettes permettent une mesure et lecture de distances en mm et en dixième de millimètre. En d'autres termes, dans la suite de la description, il est considéré que n = 10.

Toutefois, il peut être envisagé d'utiliser une autre variante de n pour certaines applications particulières. On pourra par exemple concevoir des dispositifs pour permettre la mesure en millimètre et en demi-millimètre (n = 2) ou en millimètre et en cinquième de millimètre (n = 5).

Selon le principe de l'invention, les graduations 21 de la deuxième réglette 2 se présentent sous la forme de dix lignes de graduations 21 (rappelons que, selon le présent mode de réalisation, n = 10), chaque ligne 22 comprenant au moins une fenêtre 220 alignée sur la marque 20 par rapport à la direction de mesure D.

A chaque ligne 22 est attribué un nombre n de n^{ième} de millimètre à ajouter au nombre entier de millimètres de la distance mesurée.

Par conséquent, selon le présent mode de réalisation, à chaque ligne 22 est attribué un nombre de dixième de millimètre. La première ligne correspond à 0/10 de millimètre, la deuxième à 1/10 de millimètre, la troisième à 2/10 de millimètre.... jusqu'à la dixième qui correspond donc à 9/10 de millimètre.

On note qu'on pourraient obtenir un système de lecture aussi performant avec seulement neuf lignes (soit, pour le présent mode de réalisation, n-1 ligne), ceci en supprimant la première ligne correspondant à une mesure de nombres entiers de millimètres avec 0/10 de millimètre (étant considéré que si la mesure ne sélectionne aucune des neuf lignes, c'est donc que la mesure est à 0/10).

Chaque ligne 22 peut comprendre deux fenêtres 220 et préférentiellement cinq fenêtres tel qu'illustré par la figure 2. Dans ce cas, les fenêtres sont espacées deux à deux d'une distance de 1 mm, la ou les fenêtres autres que la première fenêtre (celle-ci étant celle alignée sur la marque 20 selon la direction de mesure T) s'étendant à la droite de ladite première fenêtre.

En outre, les fenêtres des lignes sont disposées de telle sorte que les premières fenêtres (telles que définies précédemment) sont alignées entre elles selon une direction perpendiculaire à la direction de mesure D.

En référence à la figure 1, la première réglette 1 présente quant à elle n lignes 11 de graduation 110 prévues pour la mesure des n^{ième} de millimètres, en l'occurrence les dixièmes de millimètres. Pour ce faire, les graduations d'une même ligne sont écartées deux à deux d'une distance de 1 mm et les graduations présentent, d'une ligne à l'autre, un décalage de 1/n mm (donc de 1/10 de millimètre selon le présent mode de réalisation) par rapport à la direction de mesure D. Chaque ligne présente des graduations sur toute la longueur de la plage P.

Le décalage d'une ligne à l'autre est incrémental de 1/n mm, les graduations s'étendant, selon la direction de mesure D, sur une largeur inférieure ou égale à 1/n mm.

Bien entendu, les lignes de la deuxième réglette sont positionnées de façon à pouvoir être placées en coïncidence avec les lignes de la première réglette.

Selon le présent mode de réalisation, et à titre de simple exemple illustratif, les graduations des lignes de la première réglette sont réalisées sous forme de traits s'étendant selon une direction perpendiculaire à la direction de mesure D, sur une hauteur de 2 mm et sur une largeur comprise entre 0,08 mm et 0,1 mm (l'entraxe entre deux graduations voisines de deux lignes 11 successives étant rappelons-le de 1/10 mm selon le présent mode de réalisation).

A titre indicatif, les fenêtres présentent les dimensions suivantes dans le présent mode de réalisation : leur hauteur est de 2 mm et leur largeur est comprise entre 0,06 mm et 0,1 mm.

Selon un mode de réalisation envisageable, les fenêtres 220 de la deuxième réglette sont obtenues par une découpe du matériau de la deuxième réglette, de façon à réaliser des évidements présentant par exemple les dimensions indiquées ci-dessus.

Selon un autre mode de réalisation envisageable, chaque fenêtre 220 correspond à une zone de transparence dans la deuxième réglette.

On décrit ci-après de façon plus précise un exemple de dispositif de mesure et de lecture de distances selon l'invention.

Le dispositif comprend une première réglette 1 sur laquelle est imprimée une première ligne de graduations distantes deux à deux de 1 mm, ceci sur une plage P de 35 mm. En dessous de cette première ligne sont imprimées dix rangées de vingt-quatre traits 110 de 1/10 de mm d'épaisseur et de 2 mm de hauteur de couleur noire. Chacun de ces traits est espacé de 1 mm d'un trait voisin.

La première de ces lignes 11 de traits est alignée avec les graduations en mm de 0 à 35 mm de la première ligne mentionnée précédemment.

La deuxième rangée de traits est décalée de 1/10 de mm par rapport aux graduations de la ligne précédente. La troisième rangée de traits est décalée de 1/10 de mm par rapport à la ligne précédente, et ainsi de suite jusqu'à la dixième rangée de traits qui est décalée de 9/10 de mm par rapport aux graduations de la première ligne mentionnée précédemment.

La tirette, constituée par la deuxième réglette, est quant à elle translucide et comprend un trait noir de 1/10 de mm d'épaisseur et de 2 mm de hauteur, constituant la marque 20. Sous cette marque 20 est imprimé un rectangle noir dans lequel sont laissés en réserve les chiffres 0 à 9 de 2 mm de hauteur alignés verticalement. En face de chacun de ces chiffres sont pratiquées des fenêtres de 0,08 mm de largeur et de 2 mm de hauteur. Ces fenêtres, au nombre de cinq par rangée, sont espacées de 1 mm et sont toutes alignées les unes en dessous des autres. Une telle conception forme donc cinq colonnes de dix fenêtres de 0,08 mm de largeur et de 2 mm de hauteur. La première de ces colonnes est alignée avec la marque 20.

La tirette constituée par la deuxième réglette est superposée sur la première réglette de telle sorte que les lignes de fenêtres soient amenées dans une position qui coïncide avec celle des graduations des lignes 11 de la première réglette. En d'autres termes, il suffit de s'assurer que la première des lignes 22 de fenêtre 220 est alignée avec la première des lignes 11 de graduations 110. Les autres lignes 22 seront ainsi placées chacune en coïncidence avec une ligne 11 de la première réglette, ceci du fait que l'espace séparant deux lignes 22 de la première réglette est identique à l'espace séparant deux lignes 11 de la première réglette.

Lorsque l'opérateur procède à une mesure, il fait coulisser, selon la direction de mesure D, la deuxième réglette par rapport à la première réglette. Pour une distance à mesurer donnée, la marque 20 est alors sensiblement dans l'alignement des graduations principales 10 de la première réglette. Les fenêtres 220 d'une des lignes 22 laissent alors apparaître les traits 110 d'une des lignes 11 de la première réglette, ceci tandis que les fenêtres de toutes les autres lignes restent blanches (puisque non placées en coïncidence avec les traits des autres lignes 11 de la première réglette).

La ligne 22 de fenêtre 220 « obturée » indique le nombre de dixièmes de mm (ou plus généralement de n^{ième} de mm) à ajouter aux nombres de mm de la ligne de graduations principale 10. En d'autres termes, il suffit à l'opérateur de rechercher la ligne 22 (noircie) par la présence des traits 110 d'une des lignes 11 pour obtenir le nombre de dixièmes de mm (ou plus généralement de n^{ième} de mm).

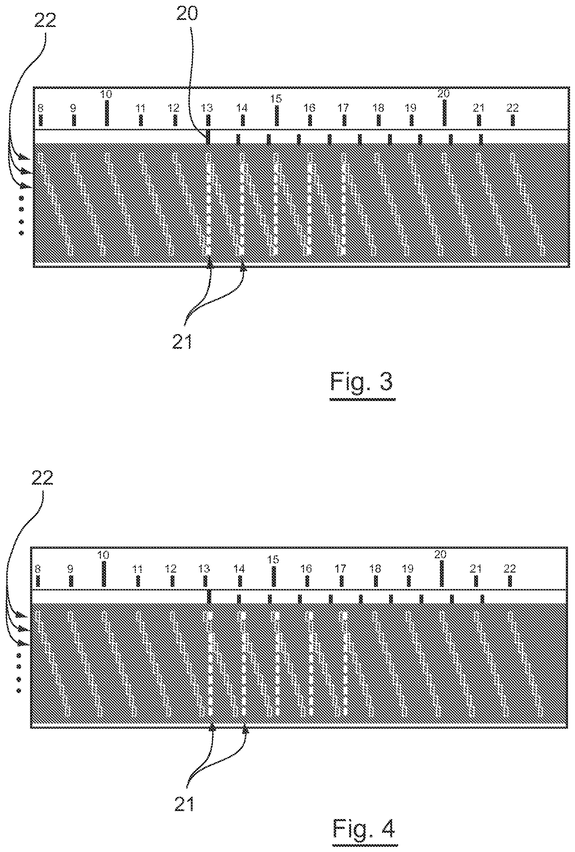

Dans l'exemple illustré par la figure 3, la marque 20 est placée au voisinage de la graduation principale 10 correspondant à 13 mm. Les fenêtres 220 de la ligne 22 correspondant à 0/10 de mm est noircie. La distance mesurée est donc 13,0 mm.

Dans l'exemple illustré par la figure 4, c'est cette fois la deuxième ligne 22 de fenêtres 220 qui est noircie, cette ligne correspondant à la lecture de 1/10 de mm. La distance mesurée est donc de 13,1 mm (la marque 20 étant, comme dans le cas précédent, placée au voisinage de la graduation principale correspondant à 13 mm).

Sur les figures 3 et 4, on note que les rectangles apparaissant en traits pointillés blanc sur fond noir correspondent aux traits noirs sur fond blanc de la première réglette.

## Revendications

1. Dispositif de mesure et de lecture de distance, comprenant :
- une première réglette (1) portant des graduations (10) en millimètres le long d'une plage (P) et selon une direction de mesure (D) ;
- une deuxième réglette (2) portant une marque (20) destinée à être déplacée selon ladite direction de mesure (D) par rapport auxdites graduations (10) de ladite première réglette (1) et présentant des graduations (21) en 1/n de millimètres, n étant un nombre entier supérieur ou égal à 2, pour permettre une mesure et une lecture de distances en millimètres et en 1/n de millimètres,
**caractérisé en ce que** les graduations (21) de ladite deuxième réglette (2) se présentent sous la forme d'au moins (n-1) lignes (22) chacune composée d'au moins une fenêtre (220) alignée sur ladite marque (20) par rapport à ladite direction de mesure (D), et **en ce que** ladite première réglette (1) présente au moins n lignes (11) de graduations (110), les graduations (110) d'une même ligne (11) de ladite première réglette (1) étant écartées d'un millimètre l'une de l'autre et les lignes (11) de ladite première réglette (1) présentant un décalage incrémental de 1/n de millimètres d'une ligne (11) à l'autre, la ou les fenêtres (220) et les graduations (110) des lignes (11) de ladite première réglette (1) s'étendant, selon la direction de mesure (D), sur une largeur inférieure ou égale à 1/n millimètre, les lignes (22) de la deuxième réglette (2) étant susceptibles d'être placées en coïncidence avec les lignes (11) de la première réglette (1).

2. Dispositif de mesure et de lecture de distance selon la revendication 1, **caractérisé en ce que** n = 10 ;

3. Dispositif de mesure et de lecture de distance selon l'une des revendications 1 et 2, **caractérisé en ce que** les lignes (22) de ladite deuxième réglette (2) présentent chacune au moins deux fenêtres (220), une première alignée sur ladite marque (20) et l'autre à la droite de la première.

4. Dispositif de mesure et de lecture de distance selon la revendication 3, **caractérisé en ce que** les lignes (22) de ladite deuxième réglette (2) présentent chacune cinq fenêtres (220), une première alignée sur ladite marque (20) et les autres à la droite de la première.

5. Dispositif de mesure et de lecture de distance selon l'une quelconque des revendications 1 à 4, **caractérisé en ce que** les graduations (110) des lignes (11) de ladite première réglette (1) sont des traits perpendiculaires à la direction de mesure (D).

6. Dispositif de mesure et de lecture de distance selon la revendication 5, **caractérisé en ce que** lesdits traits présentent une hauteur de 2 mm.

7. Dispositif de mesure et de lecture de distance selon l'une quelconque des revendications 1 à 6, **caractérisé en ce que** lesdites fenêtres (220) sont des fenêtres par transparence.

8. Dispositif de mesure et de lecture de distance selon l'une quelconque des revendications 1 à 6, **caractérisé en ce que** lesdites fenêtres (220) sont des évidements.

## Patentansprüche

1. Vorrichtung zum Messen und Ablesen von Abständen, umfassend:
- ein erstes Lineal (1), das Millimetereinteilungen (10) entlang eines Bereichs (P) und in einer Messrichtung (D) trägt;
- ein zweites Lineal (2), das eine Markierung (20) trägt, die dazu bestimmt ist, in Messrichtung (D) relativ zu den Einteilungen (10) des ersten Lineals (1) verschoben zu werden, und das Einteilungen (21) in 1/n Millimeter aufweist, wobei n eine ganze Zahl größer oder gleich 2 ist, um ein Messen und Ablesen von Abständen in Millimetern und in 1/n Millimetern zu ermöglichen,
**dadurch gekennzeichnet, dass** die Einteilungen (21) des zweiten Lineals (2) in Form von mindestens (n-1) Zeilen (22) vorhanden sind, die jeweils aus mindestens einem zur Markierung (20) relativ zur Messrichtung (D) justieren, Fenster (220), bestehen, und dass das erste Lineal (1) mindestens n Zeilen (11) von Einteilungen (110) aufweist, wobei die Einteilungen (110) einer selben Zeile (11) des ersten Lineals (1) um einen Millimeter voneinander beabstandet sind, und die Zeilen (11) des ersten Lineals (1) einen Inkrementversatz von 1/n Millimetern von einer Zeile (11) zur anderen aufweisen, wobei sich das oder die Fenster (220) und die Einteilungen (110) der Zeilen (11) des ersten Lineals (1) in Messrichtung über eine Breite kleiner oder gleich 1/n Millimeter erstrecken, wobei die Zeilen (22) des zweiten Lineals (2) geeignet sind, in Übereinstimmung mit den Zeilen (11) des ersten Lineals (1) angeordnet zu werden.

2. Vorrichtung zum Messen und Ablesen von Abständen nach Anspruch 1, **dadurch gekennzeichnet, dass** n = 10 ist.

3. Vorrichtung zum Messen und Ablesen von Abständen nach einem der Ansprüche 1 und 2, **dadurch gekennzeichnet, dass** die Zeilen (22) des zweiten Lineals (2) jeweils mindestens zwei Fenster (220) aufweisen: ein Erstes, das zur Markierung (20) justiert ist, und das Andere rechts vom Ersten.

4. Vorrichtung zum Messen und Ablesen von Abständen nach Anspruch 3, **dadurch gekennzeichnet, dass** die Zeilen (22) des zweiten Lineals (2) jeweils fünf Fenster (220) aufweisen: ein Erstes, das zur Markierung (20) justiert ist, und die Anderen rechts vom Ersten.

5. Vorrichtung zum Messen und Ablesen von Abständen nach einem der Ansprüche 1 bis 4, **dadurch gekennzeichnet, dass** die Einteilungen (110) der Zeilen (11) des ersten Lineals (1) zur Messrichtung (D) senkrechte Linien sind.

6. Vorrichtung zum Messen und Ablesen von Abständen nach Anspruch 5, **dadurch gekennzeichnet, dass** die Linien eine Höhe von 2 mm aufweisen.

7. Vorrichtung zum Messen und Ablesen von Abständen nach einem der Ansprüche 1 bis 6, **dadurch gekennzeichnet, dass** die Fenster (220) transparente Fenster sind.

8. Vorrichtung zum Messen und Ablesen nach einem der Ansprüche 1 bis 6, **dadurch gekennzeichnet, dass** die Fenster (220) Aussparungen sind.

## Claims

1. Device for measuring and reading distances, comprising:
- a first ruler (1) bearing graduations (10) in millimetres along a span (P) and in a measuring direction (D);
- a second ruler (2) bearing a mark (20) which is intended to be displaced along said measuring direction (D) relative to said graduations (10) of said first ruler (1) and having graduations (21) in 1/n millimetres, n being a whole number which is greater than or equal to 2, to make it possible to measure and read distances in millimetres and in 1/n millimetres,
**characterised in that** the graduations (21) of said second ruler (2) are in the form of at least (n-1) lines (22), each composed of at least one window (220) which is aligned with said mark (20) relative to said measuring direction (D), and **in that** said first ruler (1) has at least n lines (11) of graduations (110), the graduations (110) of the same line (11) of said first ruler (1) being at a distance of one millimetre from one another, and the lines (11) of said first ruler (1) having an incremental offset of 1/n millimetres from one line (11) to the other, the window(s) (220) and the graduations (110) of the lines (11) of said first ruler (1) extending, in the measuring direction (D), over a width which is less than or equal to 1/n millimetre, the lines (22) of the second ruler (2) being liable to be placed so as to coincide with the lines (11) of the first ruler (1).

2. Device for measuring and reading distances according to Claim 1, **characterised in that** n = 10.

3. Device for measuring and reading distances according to either Claim 1 or 2, **characterised in that** the lines (22) of said second ruler (2) each have at least two windows (220), a first window aligned with said mark (20), and the other to the right of the first.

4. Device for measuring and reading distances according to Claim 3, **characterised in that** the lines (22) of said second ruler (2) each have five windows (220), a first window aligned with said mark (20), and the others to the right of the first.

5. Device for measuring and reading distances according to any one of Claims 1 to 4, **characterised in that** the graduations (110) of the lines (11) of said first ruler (1) are lines which are perpendicular to the measuring direction (D).

6. Device for measuring and reading distances according to Claim 5, **characterised in that** said lines have a height of 2 mm.

7. Device for measuring and reading distances according to any one of Claims 1 to 6, **characterised in that** said windows (220) are windows visible par transparency.

8. Device for measuring and reading distances according to any one of Claims 1 to 6, **characterised in that** said windows (220) are apertures.
